# EUROPÄISCHE PATENTANMELDUNG

(11) **EP 4 331 948 A1**
(43) Veröffentlichungstag der Anmeldung: **06.03.2024**
(21) Anmeldenummer: 23186295.4
(22) Anmeldetag: 19.07.2023
(51) Int. Cl.: B62D 5/04, B62D 15/02, B62D 7/02, B66F 9/075

(54) **ELEKTRISCHE LENKUNG FÜR EIN FLURFÖRDERZEUG**

(30) Priorität: 29.08.2022 DE 102022121733
(71) Anmelder: STILL GmbH, 22113 Hamburg (DE)
(72) Erfinder: SCHMIDT, Niels, 22885 Barsbüttel (DE); OSPER, Gerald, 22147 Hamburg (DE); WOLFF, Christian, 22967 Tremsbüttel (DE); BECKER, Martin, 22589 Hamburg (DE); BIEDERER, Sven, 21643 Beckdorf (DE)
(74) Vertreter: Patentship Patentanwaltgesellschaft

(57) **Zusammenfassung**

Die Erfindung betrifft eine elektrische Lenkung (1) für ein Flurförderzeug, wobei die elektrische Lenkung (1) einen elektrischen Lenkmotor (2) aufweist, der eine Motorabtriebswelle (30) umfasst, wobei die Motorabtriebswelle (30) des Lenkmotors (2) mit einem Lenkuntersetzungsgetriebe (3) in Verbindung steht, das ausgebildet ist, ein gelenktes Rad (4) um eine Lenkachse (5) zu drehen, wobei die elektrische Lenkung (1) einen Lenkwinkelsensor (20) aufweist, der ausgebildet ist, die Ist-Drehstellung des gelenktes Rades (4) um die Lenkachse (5) zu erfassen. Der Lenkwinkelsensor (20) weist ein von der Motorabtriebswelle (30) angetriebenes Sensorgetriebe (35) mit einer Sensorwelle (36), an der ein Magnetelement (37) angeordnet ist, und eine mit dem Magnetelement (37) zusammenwirkende Magnet-Sensoreinheit (38) auf, die ausgebildet ist, die Drehstellung des Magnetelements (37) zu erfassen. Der Lenkwinkelsensor (20) ist an einer dem Lenkuntersetzungsgetriebe (3) gegenüberliegenden Stirnseite (2b) des Lenkmotors (2) angebaut.

## Beschreibung

Die Erfindung betrifft eine elektrische Lenkung für ein Flurförderzeug, wobei die elektrische Lenkung einen elektrischen Lenkmotor aufweist, der eine Motorabtriebswelle umfasst, wobei die Motorabtriebswelle des Lenkmotors mit einem Lenkuntersetzungsgetriebe in Verbindung steht, das ausgebildet ist, ein gelenktes Rad um eine Lenkachse zu drehen, wobei die elektrische Lenkung einen Lenkwinkelsensor aufweist, der ausgebildet ist, die Ist-Drehstellung des gelenktes Rades um die Lenkachse zu erfassen.

Bei Flurförderzeugen, insbesondere Lagertechnikflurförderzeugen, beispielsweise Hubwagen, Kommissionierern, Schubmaststaplern oder Schleppern, ist es bekannt eine elektrische Lenkung einzusetzen, die einen elektrischen Lenkmotor aufweist, der unter Zwischenschaltung eines Lenkuntersetzungsgetriebe ein gelenktes Rad um eine Lenkachse lenkt. Derartige elektrische Lenkungen sind als Steer-by-Wire-Lenkungen ausgebildet, die keine mechanische Verbindung zwischen einem Lenkgeber, beispielsweise einer Lenkdeichsel oder einem Lenkrad oder einem Lenker, und dem gelenkten Rad aufweisen. Zur Steuerung des Lenkmotors ist eine Steuerelektronik vorgesehen, der mittels eines Sensors am Lenkgeber eine Soll-Drehstellung (Soll-Lenkwinkel) des gelenkten Rades zugeführt wird und die mittels eines Lenkwinkelsensors die Ist-Drehstellung (Ist-Lenkwinkel) und somit die absolute Position des gelenkten Rades um die Lenkachse erfasst. Die Steuerelektronik steuert bzw. regelt den Lenkmotor derart, dass die Ist-Drehstellung des gelenkten Rades der am Lenkgeber vorgegebenen gewünschten Soll-Drehstellung des gelenkten Rades entspricht.

Hierzu ist es bekannt, mit dem Lenkwinkelsensor direkt die Ist-Drehstellung des gelenkten Rades um die Lenkachse zu erfassen. Sofern das gelenkte Rad mittels eines Drehschemels um die Lenkachse drehbar angeordnet ist, wobei der Drehschemel eine Verzahnung aufweist, die von dem Lenkmotor angetrieben ist, ist es bekannt, die Ist-Drehstellung und somit die absolute Position des gelenkten Rades um die Lenkachse mit einem Zahnradeingriff direkt an der Verzahnung des Drehschemels zu erfassen, in dem ein mit der Verzahnung des Drehschemels kämmendes Zahnrad vorgesehen ist, das den im Bereich des Drehschemels und somit im Bereich des gelenktes Rades angeordneten Lenkwinkelsensor antreibt.

Bei elektrischen Lenkungen, bei denen mit dem Lenkwinkelsensor direkt die Ist-Drehstellung des gelenkten Rades um die Lenkachse erfasst wird und hierzu der Lenkwinkelsensor im Bereich des gelenkten Rades bzw. im Bereich eines Drehschemels, an dem das gelenkte Rad angeordnet ist, angeordnet ist, ist nachteilig, dass der Einbauraum für den Lenkwinkelsensor wegen der in der Nähe des Rades zu erwartenden Verschmutzung, ungünstig ist. Zudem muss der Lenkwinkelsensor bis zu der den Lenkmotor ansteuernden Steuerelektronik verkabelt werden. Diese Verkabelung birgt die Gefahr von Fehlern in den Kontaktstellen und die Gefahr von Störungen, die über die Verkabelung das Sensorsignal des Lenkwinkelsensors negativ beeinflussen.

Der vorliegenden Erfindung liegt die Aufgabe zugrunde, eine elektrische Lenkung für ein Flurförderzeug zur Verfügung zu stellen, die zumindest hinsichtlich eines der genannten Nachteile verbessert ist.

Diese Aufgabe wird erfindungsgemäß dadurch gelöst, dass der Lenkwinkelsensor ein von der Motorabtriebswelle angetriebenes Sensorgetriebe mit einer Sensorwelle, an der ein Magnetelement angeordnet ist, und eine mit dem Magnetelement zusammenwirkende Magnet-Sensoreinheit aufweist, die ausgebildet ist, die Drehstellung des Magnetelements zu erfassen, wobei der Lenkwinkelsensor an einer dem Lenkuntersetzungsgetriebe gegenüberliegenden Stirnseite des Lenkmotors angebaut ist.

Erfindungsgemäß ist der Lenkwinkelsensor, der das Sensorgetriebe mit der Sensorwelle, die mit dem Magnetelement versehen ist, und die mit dem Magnetelement zusammenwirkende Magnet-Sensoreinheit aufweist, an der dem Lenkuntersetzungsgetriebe gegenüberliegenden Stirnseite des Lenkmotors angeordnet. Hierdurch kann insbesondere erzielt werden, dass der Lenkwinkelsensor und insbesondere die Magnet-Sensoreinheit beabstandet von dem gelenkten Rad angeordnet ist. Insbesondere kann der Lenkwinkelsensor und insbesondere die Magnet-Sensoreinheit getrennt von dem gelenkten Rad angeordnet sein. Dadurch kann insbesondere ein Schutz vor Verschmutzungen erzielt werden. Mit dem Sensorgetriebe kann in einfacher Weise insbesondere erzielt werden, dass im Betrieb der elektrischen Lenkung die Sensorwelle maximal eine einzelne Vollumdrehung ausführt, so dass mit dem an der Sensorwelle angeordneten Magnetelement und mit der dem Magnetelement zusammenwirkende Magnet-Sensoreinheit über die Erfassung der Drehstellung des Magnetelements die Ist-Drehstellung (Ist-Lenkwinkel) und somit die absolute Position des gelenkten Rades erfasst werden kann.

Gemäß einer vorteilhaften Ausgestaltungsform der Erfindung weist insbesondere das Sensorgetriebe eine von der Motorabtriebswelle angetriebene Eingangswelle auf, die mindesten eine Zwischenwelle antreibt, wobei die Sensorwelle als Abtriebswelle des Sensorgetriebes ausgebildet ist, die mittels der Zwischenwelle angetrieben ist. Mit einem derartigen Sensorgetriebe, wobei die jeweilige Zwischenwelle bevorzugt jeweils als Stirnradgetriebestufe ausgebildet ist, kann in einfacher Weise und bei geringem Bauaufwand des Sensorgetriebes erzielt werden, dass die als Abtriebswelle ausgebildete Sensorwelle im Betrieb der elektrischen Lenkung maximal eine einzelne Vollumdrehung ausführt.

Gemäß einer vorteilhaften Ausgestaltungsform der Erfindung ist insbesondere die Getriebeuntersetzung des Sensorgetriebes identisch zur Getriebeuntersetzung des Lenkuntersetzungsgetriebes. Hierdurch wird als Vorteil erzielt, dass die mit dem an der Sensorwelle angeordneten Magnetelement und der dem Magnetelement zusammenwirkende Magnet-Sensoreinheit erfasste Drehstellung des Magnetelements der Ist-Drehstellung (Ist-Lenkwinkel) und somit der absoluten Position des gelenkten Rades entspricht.

Gemäß einer vorteilhaften Ausgestaltungsform der Erfindung ist insbesondere das Magnetelement an einer Stirnseite der Sensorwelle angeordnet und ist die Magnet-Sensoreinheit fluchtend zur Drehachse der Sensorwelle angeordnet. Hierdurch wird als Vorteil erzielt, dass mit der Magnet-Sensoreinheit, die bevorzugt mindestens einen Hall-Sensor umfasst, bei einer Drehung der Sensorwelle durch eine Veränderung des Magnetfeldes des an der Stirnseite der Sensorwelle angeordneten Magnetelements die Drehstellung des Magnetelements und somit die Ist-Drehstellung (Ist-Lenkwinkel) und somit die absolute Position des gelenkten Rades in einfacher Weise erfasst werden kann.

Gemäß einer vorteilhaften Ausgestaltungsform der Erfindung ist insbesondere das Sensorgetriebe in einem Sensorgetriebegehäuse angeordnet, das an der dem Lenkuntersetzungsgetriebe gegenüberliegenden Stirnseite des Lenkmotors angeordnet ist. In einem Sensorgetriebegehäuse kann das Sensorgetriebe in einfacher Weise geschützt an der dem Lenkuntersetzungsgetriebe gegenüberliegenden Stirnseite des Lenkmotors angeordnet werden.

Gemäß einer vorteilhaften Ausgestaltungsform der Erfindung weist die elektrische Lenkung einen Drehzahlsensor auf, der ausgebildet ist, die Drehzahl und/oder die Drehrichtung der Motorabtriebswelle des Lenkmotors zu erfassen. Für den Betrieb des elektrischen Lenkmotors ist es vorteilhaft, die Drehzahl und/oder die Drehrichtung der Motorabtriebswelle des Lenkmotors zu erfassen, so dass die Lenkrichtung des gelenkten Rades ermittelt werden kann und die Lenkgeschwindigkeit des gelenkten Rades gesteuert bzw. geregelt werden kann.

Gemäß einer vorteilhaften Ausgestaltungsform der Erfindung ist insbesondere die Eingangswelle des Sensorgetriebes drehfest mit der Motorabtriebswelle des Lenkmotors verbunden und ist der Drehzahlsensor ausgebildet, die Drehzahl und/oder die Drehrichtung der Eingangswelle zu erfassen. Hierdurch wird als Vorteil erzielt, dass die Eingangswelle des Sensorgetriebes im Betrieb des Lenkmotors dieselbe Drehzahl und Drehrichtung wie die Motorabtriebswelle des Lenkmotors aufweist, so dass der Drehzahlsensor vor Verschmutzungen geschützt im Bereich des Sensorgetriebes angeordnet werden kann.

Gemäß einer vorteilhaften Ausgestaltungsform der Erfindung weist insbesondere der Drehzahlsensor ein an der Eingangswelle angeordnetes weiteres Magnetelement auf und eine mit dem weiteren Magnetelelement zusammenwirkende weitere Magnet-Sensoreinheit auf, die ausgebildet ist, die Drehzahl und/oder die Drehrichtung des weiteren Magnetelements zu erfassen. Mit dem an der Eingangswelle des Sensorgetriebes angeordneten weiteren Magnetelement und der dem weiteren Magnetelement zusammenwirkende weiteren Magnet-Sensoreinheit kann über die Erfassung der Drehstellung des weiteren Magnetelements die Drehzahl und/oder die Drehrichtung des Magnetelements und damit die Drehzahl und/oder die Drehrichtung der Eingangswelle des Sensorgetriebes und somit der Motorabtriebswelle des Lenkmotors in einfacher Weise erfasst werden.

Gemäß einer vorteilhaften Ausgestaltungsform der Erfindung ist insbesondere das weitere Magnetelement an einer Stirnseite der Eingangswelle angeordnet und ist die weitere Magnet-Sensoreinheit fluchtend zur Drehachse der Eingangswelle angeordnet. Hierdurch wird als Vorteil erzielt, dass mit der weiteren Magnet-Sensoreinheit, die bevorzugt mindestens einen Hall-Sensor umfasst, bei einer Drehung der Eingangswelle durch eine Veränderung des Magnetfeldes des an der Stirnseite der Eingangswelle angeordneten Magnetelements die Drehzahl und/oder die Drehrichtung der Eingangswelle und somit der Motorabtriebswelle in einfacher Weise erfasst werden kann.

Gemäß einer vorteilhaften Ausgestaltungsform der Erfindung weist insbesondere der Drehzahlsensor eine mit der Eingangswelle verbundene Geberscheibe und eine mit der Geberscheibe zusammenwirkende optische Sensoreinheit auf. Mit einer an der Eingangswelle des Sensorgetriebes angeordneten Geberscheibe und der mit der Geberscheibe zusammenwirkenden optischen Sensoreinheit kann ebenfalls in einfacher und sichererer Weise die Drehzahl und/oder die Drehrichtung der Eingangswelle und somit der Motorabtriebswelle erfasst werden. Sofern für den Lenkwinkelsensor und den Drehzahlsensor unterschiedliche Messprinzipien eingesetzt werden, kann insbesondere die Robustheit gegenüber eventuellen Störungen erhöht werden.

Gemäß einer vorteilhaften Ausgestaltungsform der Erfindung ist insbesondere die Magnet-Sensoreinheit des Lenkwinkelsensors an einer Leiterplatte angeordnet. Hierdurch werden kurze Leitungswege der Magnet-Sensoreinheit zu einer an der Leiterplatte angeordneten Auswerteeinheit erzielt, in der aus der mit der Magnet-Sensoreinheit erfassten Drehstellung des Magnetelements die Ist-Drehstellung (Ist-Lenkwinkel) und somit die absolute Position des gelenkten Rades bestimmt wird.

Gemäß einer vorteilhaften Ausgestaltungsform der Erfindung ist insbesondere die Leiterplatte in das Sensorgetriebegehäuse angebaut oder eingebaut oder ist die Leiterplatte in einem an dem Sensorgetriebegehäuse angebauten Steuerungsgehäuse angeordnet. Hierdurch wird ein einfacher Aufbau mit einer geringen Anzahl von Bauteilen erzielt.

Gemäß einer vorteilhaften Ausgestaltungsform der Erfindung ist insbesondere an der Leiterplatte die weitere Magnet-Sensoreinheit oder die optische Sensoreinheit des Drehzahlsensors angeordnet. Hierdurch werden kurze Leitungswege der Sensoreinheit zu einer an der Leiterplatte angeordneten Auswerteeinheit erzielt, in der aus den Sensorsignalen der Sensoreinheit die Drehzahl und/oder die Drehrichtung der Eingangswelle und somit der Motorabtriebswelle bestimmt wird.

Die Leiterplatte, an der die Magnet-Sensoreinheit des Lenkwinkelsensors und gegebenenfalls die Sensoreinheit des Drehzahlsensors angeordnet ist, bildet somit eine Sensor-Leiterplatte, die in einfacher Weise in das Sensorgetriebegehäuse eingebaut oder angebaut werden kann.

Gemäß einer vorteilhaften Ausgestaltungsform der Erfindung ist insbesondere die Leiterplatte mittels eines Verbindungskabels mit einer den Lenkmotor ansteuernden Steuerelektronik verbunden. Mit einem entsprechenden Verbindungskabel kann in einfacher Weise die Leiterplatte mit einer den Lenkmotor ansteuernden Steuerelektronik verbunden werden.

Gemäß einer vorteilhaften Ausgestaltungsform der Erfindung ist insbesondere die Leiterplatte mit einer den Lenkmotor ansteuernden Steuerelektronik versehen. Die Leiterplatte, an der die Magnet-Sensoreinheit des Lenkwinkelsensors, die den Lenkmotor ansteuernden Steuerelektronik und gegebenenfalls weiterhin die Sensoreinheit des Drehzahlsensors angeordnet ist, bildet somit eine Hauptleiterplatte, die den Lenkmotor ansteuert. Hierdurch sind keinerlei Verbindungskabel mit entsprechenden Steckerverbindungen zwischen der Magnet-Sensoreinheit des Lenkwinkelsensors und der Sensoreinheit des Drehzahlsensors und der den Lenkmotor ansteuernden Steuerelektronik erforderlich, wodurch die Gefahr von Störungen reduziert und eine hohe Betriebssicherheit der elektrischen Lenkung erzielt wird.

Die Erfindung betrifft weiterhin ein Flurförderzeug mit einer erfindungsgemäßen elektrischen Lenkung. Insbesondere bevorzugt kann das Flurförderzeug zumindest eine elektrische Lenkung, vorzugsweise zwei elektrische Lenkungen, umfassen.

Für weitere Vorteile, Ausführungsvarianten und Ausführungsdetails dieses weiteren Aspekts der Erfindung und ihrer möglichen Fortbildungen wird auch auf die zuvor erfolgte Beschreibung zu den entsprechenden Merkmalen und Fortbildungen verwiesen.

Die erfindungsgemäße Lenkung weist eine Reihe von Vorteilen auf.

Durch die Anordnung des Lenkwinkelsensors an einer dem Lenkuntersetzungsgetriebe gegenüberliegenden Stirnseite des Lenkmotors ist der Lenkwinkelsensor geschützt positioniert und nicht mehr im verschmutzten Bereich des Rades angeordnet.

Bei einer Ausführung der Erfindung, bei der an einer Leiterplatte die Magnet-Sensoreinheit des Lenkwinkelsensors, die den Lenkmotor ansteuernden Steuerelektronik und gegebenenfalls weiterhin die Sensoreinheit des Drehzahlsensors angeordnet ist, ist keine Verkabelung der entsprechenden Sensoren mit der den Lenkmotor ansteuernden Steuerelektronik erforderlich, da die entsprechenden Sensoreinheiten direkt an der den Lenkmotor ansteuernden Leiterplatte positioniert werden und somit die Sensoreinheiten in die Leiterplatte integriert sind.

Durch den Entfall der Verkabelung und der entsprechenden Steckverbindungen ist die elektrische Lenkung deutlich robuster gegen Störungen. Zudem führt der Entfall der Verkabelung und der entsprechenden Steckverbindungen zu verringerten Herstellkosten und einem verringerten Montageaufwand.

Weitere Vorteile und Einzelheiten der Erfindung werden beispielshaft anhand der in den schematischen Figuren dargestellten Ausführungsbeispiele näher erläutert. Hierbei zeigt
- Figur 1: eine schematische Darstellung einer erfindungsgemäßen elektrischen Lenkung,
- Figur 2: den oberen Abschnitt des Lenkmotors einer ersten Ausführungsform der erfindungsgemäßen elektrischen Lenkung in einer Schnittdarstellung,
- Figur 3: den oberen Abschnitt des Lenkmotors einer zweiten Ausführungsform der erfindungsgemäßen elektrischen Lenkung in einer Schnittdarstellung,
- Figur 4: ein Sensorgetriebe der Figur 2 in einer perspektivischen Darstellung
- Figur 5: den oberen Abschnitt des Lenkmotors einer dritten Ausführungsform der erfindungsgemäßen elektrischen Lenkung in einer Schnittdarstellung,
- Figur 6: ein Sensorgetriebe der Figur 5 in einer perspektivischen Darstellung und
- Figur 7: das Sensorgetriebe der Figur 6 mit zusätzlicher Leiterplatte.

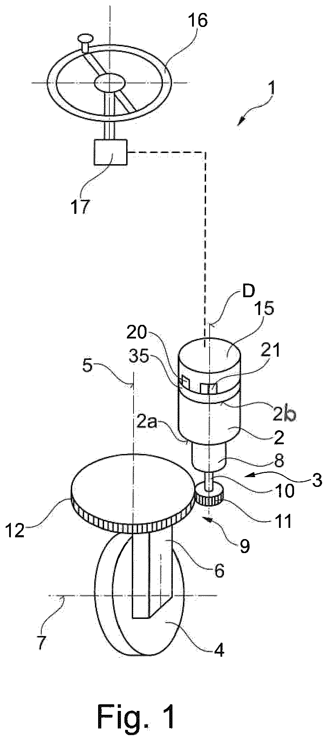

In der Figur 1 ist eine erfindungsgemäße, als Steer-by-Wire-Lenkung ausgebildete elektrische Lenkung 1 für ein Flurförderzeug dargestellt.

Die elektrische Lenkung 1 weist einen elektrischen Lenkmotor 2 auf, der unter Zwischenschaltung eines Lenkuntersetzungsgetriebes 3 ein gelenktes Rad 4 des Flurförderzeugs um eine Lenkachse 5 dreht und somit lenkt.

Im dargestellten Ausführungsbeispiel ist das gelenkte Rad 4 an einem Drehschemel 6 um eine Drehachse 7 drehbar angeordnet, wobei der Drehschemel 6 um die Lenkachse 5, die bevorzugt vertikal angeordnet ist, drehbar angeordnet ist.

Im dargestellten Ausführungsbeispiel umfasst das Lenkuntersetzungsgetriebe 3 ein vom Lenkmotor 2 angetriebenes Untersetzungsgetriebe 8 und eine Getriebestufe 9. Das Untersetzungsgetriebe 8 ist von einer in der Figur 1 nicht näher dargestellten Motorabtriebswelle, die um eine Drehachse D drehbar angeordnet ist, des Lenkmotors 2 angetrieben und weist eine Abtriebswelle 10 auf, die mit einem Antriebsritzel 11 versehen ist. Die Getriebestufe 9 ist im dargestellten Ausführungsbeispiel als Zahnradgetriebe ausgebildet, das von dem Antriebsritzel 11 und einem an dem Drehschemel 6 angeordneten Zahnrad 12 gebildet ist, mit dem das Antriebsritzel 11 in Zahneingriff steht. Alternativ kann die Getriebestufe 9 als Kettengetriebe oder Riemengetriebe oder als Lineargetriebe ausgebildet sein.

Zur Steuerung des Lenkmotors 2 ist eine Steuerelektronik 15 vorgesehen. Die Steuerelektronik 15 steht mit einem an einem Lenkgeber 16 angeordneten Sensor 17 in Verbindung, der ausgebildet ist, bei einer Betätigung des Lenkgebers 17 eine Soll-Drehstellung (Soll-Lenkwinkel) für das gelenkte Rad 4 zu erfassen. Die Steuerelektronik 15 steht weiterhin mit einem Lenkwinkelsensor 20 in Verbindung, der ausgebildet ist, die Ist-Drehstellung (Ist-Lenkwinkel) und somit die absolute Position des gelenktes Rades 4 um die Lenkachse 5 zu erfassen. Weiterhin steht die Steuereinrichtung 15 mit einem Drehzahlsensor 21 in Verbindung, der ausgebildet ist, die Drehzahl und/oder die Drehrichtung der Motorabtriebswelle des Lenkmotors 2 zu erfassen. Die Steuerelektronik 15 steuert bzw. regelt den Lenkmotor 2 derart, dass die Ist-Drehstellung des gelenktes Rades 4 der am Lenkgeber 16 vorgegebenen gewünschten Soll-Drehstellung des gelenktes Rades 4 entspricht.

Gemäß der Figur 1 ist das Lenkuntersetzungsgetriebe 3 an einer ersten Stirnseite 2a des Lenkmotors 2 angeordnet und der Lenkwinkelsensor 20 an einer der ersten Stirnseite 2a gegenüberliegenden zweiten Stirnseite 2b des Lenkmotors 2 angeordnet.

In dem in der Figur 1 dargestellten Ausführungsbeispiel, ist der Lenkmotor 2 mit der Drehachse D in einer vertikalen Orientierung angeordnet, wobei die erste Stirnseite 2a des Lenkmotors 2, an der das Lenkuntersetzungsgetriebe 3 angeordnet ist, als vertikal untere Stirnseite des Lenkmotors 2 ausgebildet ist, und die zweite Stirnseite 2b des Lenkmotors, an der der Lenkwinkelsensor 20 angeordnet ist, als vertikal obere Stirnseite des Lenkmotors 2 ausgebildet ist.

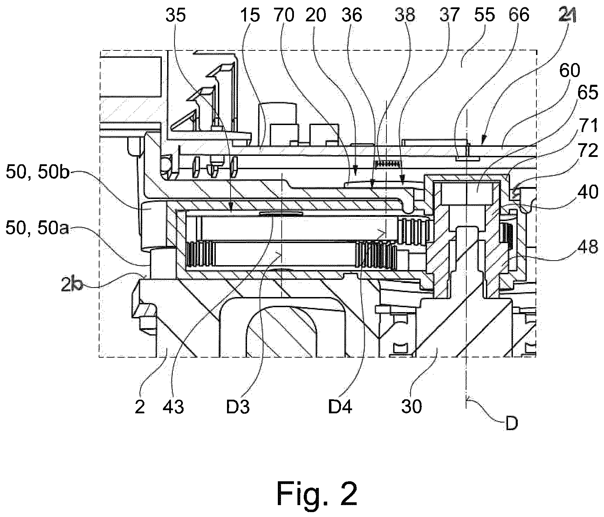

In der Figur 2 ist der Bereich der zweiten Stirnseite 2b des Lenkmotors 2 gemäß einer ersten Ausführungsform der elektrischen Lenkung 1 in einem Längsschnitt dargestellt.

Der an der zweiten Stirnseite 2b des Lenkmotors 2 angeordnete Lenkwinkelsensor 20 weist ein von der Motorabtriebswelle 30 des Lenkmotors 2 angetriebenes Sensorgetriebe 35 mit einer Sensorwelle 36, an der ein Magnetelement 37 angeordnet ist, und eine mit dem Magnetelement 37 zusammenwirkende Magnet-Sensoreinheit 38 auf, die ausgebildet ist, die Drehstellung des Magnetelements 37 zu erfassen.

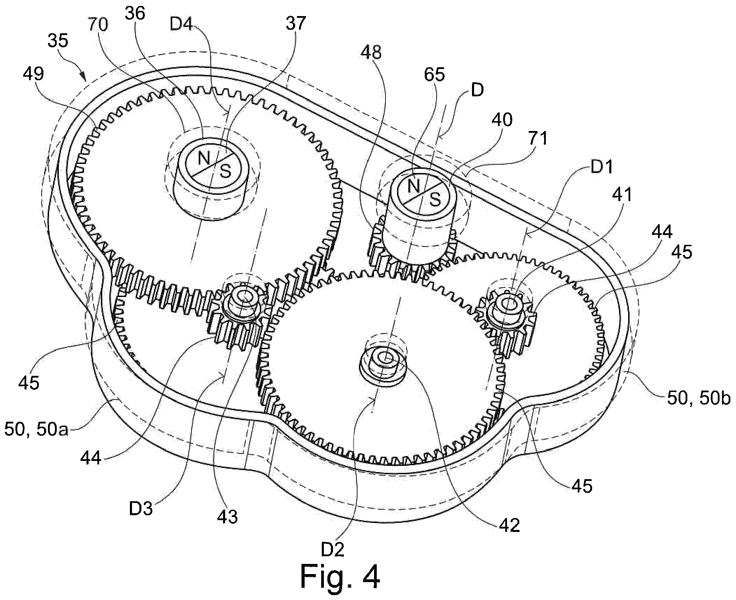

Der Aufbau des Sensorgetriebes 35 wird in Verbindung mit der Figur 4 näher beschrieben.

Das Sensorgetriebe 35 weist eine von der Motorabtriebswelle 30 angetriebene Eingangswelle 40 auf, die mindesten eine Zwischenwelle 41, 42, 43 antreibt, wobei die Sensorwelle 36 als Abtriebswelle des Sensorgetriebes 35 ausgebildet ist, die mittels der Zwischenwellen 41, 42, 43 angetrieben ist.

Im dargestellten Ausführungsbeispiel umfasst das Sensorgetriebe drei Zwischenwellen 41, 42, 43, wobei jede Zwischenwelle 41, 42, 43 mit einem Zahnritzel 44 und einem Zahnrad 45 versehen ist, wobei an jeder Zwischenwelle 41, 42, 43 das Zahnritzel 44 jeweils einen geringeren Durchmesser und eine geringere Zähnezahl als das Zahnrad 45 aufweist.

Die Eingangswelle 40 des Sensorgetriebes 35 ist bevorzugt koaxial zur Drehachse D der Motorabtriebswelle 30 des Lenkmotors 2 angeordnet. Die Eingangswelle 40 ist bevorzugt als hülsenartige Hohlwelle ausgebildet, die auf ein Ende der Motorabtriebswelle 30 des Lenkmotors 2 aufgesteckt ist und über ein Drehmomentübertragungsmittel mit der Motorabtriebswelle 30 des Lenkmotors 2 derart drehfest verbunden ist, dass die Eingangswelle 40 des Sensorgetriebes 35 und die Motorabtriebswelle 30 des Lenkmotors 2 dieselbe Drehzahl und Drehrichtung aufweisen.

Die Zwischenwellen 41, 42, 43 sind um Drehachsen D1, D2, D3 drehbar angeordnet, die jeweils parallel zur Drehachse D angeordnet sind. Die Sensorwelle 36 ist um eine Drehachse D4 drehbar angeordnet, die parallel zur Drehachse D sowie parallel zu den Drehachsen D1, D2, D3 der Zwischenwellen 41, 42, 43 angeordnet ist.

Die Eingangswelle 40 des Sensorgetriebes 35 ist mit einem Zahnritzel 48 versehen, das mit dem Zahnrad 45 der Zwischenwelle 41 in Eingriff steht. Das Zahnritzel 44 der Zwischenwelle 41 steht mit dem Zahnrad 45 der Zwischenwelle 42 in Eingriff. Das nicht näher dargestellte Zahnritzel der Zwischenwelle 42 steht mit dem Zahnrad 45 der Zwischenwelle 43 in Eingriff. Das Zahnritzel 44 der Zwischenwelle 43 steht mit einem Zahnrad 49 an der Sensorwelle 36 in Eingriff. Die Zwischenwellen 41, 42, 43 stellen somit jeweils eine Stirnradgetriebestufe mit einer Getriebeuntersetzung ins Langsame dar.

Das Sensorgetriebe 35 weist insbesondere eine Getriebeuntersetzung auf, die mit der der Getriebeuntersetzung des Lenkuntersetzungsgetriebes 3 identisch auf, so dass die Drehbewegung der Sensorwelle 36 der Drehbewegung des gelenkten Rades 4 um die Lenkachse 5 entspricht.

Wie aus der Figur 4 ersichtlich ist, ist das Magnetelement 37 an der Stirnseite der Sensorwelle 36 angeordnet. Bevorzugt ist das Magnetelement 37 als scheibenförmiger Permanentmagnet ausgebildet, wobei eine Scheibenhälfte als Nordpol N und die andere Scheibenhälfte als Südpol S ausgebildet ist.

Wie aus der Figur 2 ersichtlich ist, ist die mit dem Magnetelement 37 zusammenwirkende Magnet-Sensoreinheit 38 fluchtend zur Drehachse D4 der Sensorwelle 36 angeordnet.

Das Sensorgetriebe 35 ist in einem Sensorgetriebegehäuse 50 angeordnet, das an der dem Lenkuntersetzungsgetriebe 3 gegenüberliegenden Stirnseite 2b des Lenkmotors 2 angeordnet ist.

In dem dargestellten Ausführungsbeispiel weist das Sensorgetriebegehäuse 50 eine an der Stirnseite 2b des Lenkmotors 2 angeordnete Unterschale 50a auf, auf die eine Oberschale 50b aufgesetzt ist.

In dem dargestellten Ausführungsbeispiel ist auf dem Sensorgetriebegehäuse 50 ein Steuerungsgehäuse 55 angeordnet, in dem eine Leiterplatte 60 angeordnet ist.

Die Leiterplatte 60 ist mit der mit dem Magnetelement 37 zusammenwirkende Magnet-Sensoreinheit 38 des Lenkwinkelsensors 20 versehen.

Die Leiterplatte 60 ist in dem in der Figur 2 dargestellten Ausführungsbeispiel weiterhin mit der den Lenkmotor 2 ansteuernden Steuerelektronik 15 versehen.

In dem in der Figur 2 dargestellten Ausführungsbeispiel ist weiterhin ein Drehzahlsensor 21 vorgesehen.

In dem dargestellten Ausführungsbeispiel steht die Eingangswelle 40 des Sensorgetriebes 35, die drehsynchron mit der Motorabtriebswelle 30 des Lenkmotors 2 dreht, mit dem Drehzahlsensor 21 in Verbindung. Der Drehzahlsensor 21 ist ausgebildet, die Drehzahl und/oder die Drehrichtung der Eingangswelle 40 zu erfassen.

Der Drehzahlsensor 21 weist ein an der Eingangswelle 40 angeordnetes weiteres Magnetelement 65 und eine mit dem weiteren Magnetelement 65 zusammenwirkende weitere Magnet-Sensoreinheit 66 auf, die ausgebildet ist, die Drehzahl und/oder die Drehrichtung des weiteren Magnetelements 65 und somit die Drehzahl und/oder die Drehrichtung der Eingangswelle 40 zu erfassen, die identisch mit der Drehzahl und/oder die Drehrichtung der Motorabtriebswelle 30 des Lenkmotors 2 ist.

Wie aus der Figur 4 ersichtlich ist, ist das weitere Magnetelement 65 an der Stirnseite der Eingangswelle 40 angeordnet. Bevorzugt ist das weitere Magnetelement 65 als scheibenförmiger Permanentmagnet ausgebildet, wobei eine Scheibenhälfte als Nordpol N und die andere Scheibenhälfte als Südpol S ausgebildet ist.

Wie aus der Figur 2 ersichtlich ist, ist die mit dem weiteren Magnetelement 65 zusammenwirkende Magnet-Sensoreinheit 66 fluchtend zur Drehachse D der Eingangswelle 36 angeordnet.

Die Leiterplatte 60 ist mit der mit dem weiteren Magnetelement 65 zusammenwirkende Magnet-Sensoreinheit 66 des Drehzahlsensors 21 versehen.

Wie aus der Figur 4 ersichtlich ist, ist das Sensorgetriebegehäuse 50 an der Oberseite mit einem zylinderförmigen Deckelabschnitt 70 versehen, in dem das mit dem Magnetelement 37 versehene Wellenende der Sensorwelle 36 angeordnet ist. Das Sensorgetriebegehäuse 50 ist an der Oberseite mit einem weiteren zylinderförmigen Deckelabschnitt 71 versehen, in dem das mit dem weiteren Magnetelement 65 versehene Wellenende der Eingangswelle 40 angeordnet ist.

Das Steuerungsgehäuse 55 kann mit entsprechenden Aussparungen 72 versehen sein, durch die sich die Deckelabschnitt 70, 71 in das Innere des Steuerungsgehäuse 55 erstrecken, um zu erzielen, dass das Magnetelement 37 unter Ausbildung eines Luftspaltes von wenigen Millimetern unter der an der Leiterplatte 60 angeordneten Magnet-Sensoreinheit 38 des Lenkwinkelsensors 20 angeordnet ist und das weitere Magnetelement 65 unter Ausbildung eines Luftspaltes von wenigen Millimetern unter der an der Leiterplatte 60 angeordneten Magnet-Sensoreinheit 66 des Drehzahlsensors 21 angeordnet ist.

In dem Ausführungsbeispiel der Figuren 2 und 4 ist das Sensorgetriebe 35 vor Verschmutzungen durch das gelenkte Rad 4 geschützt auf dem Lenkmotor 2 platziert. Das Sensorgetriebe 35 der Figuren 2 und 4 enthält zwei rotierende Magnetelemente 37, 65, wobei das Magnetelement 37 die Ist-Drehstellung und somit die Ist-Position des gelenkten Rades 4 abbildet und das weitere Magnetelement 65 die Drehzahl und Drehrichtung der Motorabtriebswelle 30 abbildet. Der Lenkmotor 2 ist somit mit einem integrierten Doppelsensor für die Erfassung der Ist-Drehstellung des gelenkten Rades 4 sowie der Drehzahl und/oder Drehrichtung der Motorabtriebswelle 30 des Lenkmotors 2 versehen.

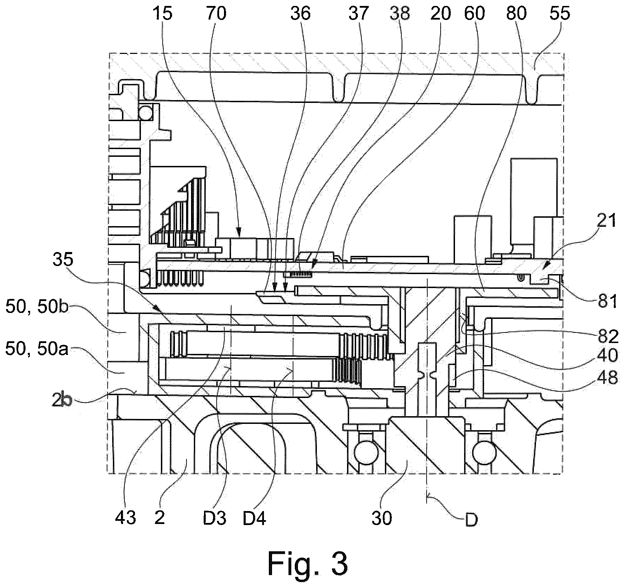

In der Figur 3 ist der Bereich der zweiten Stirnseite 2b des Lenkmotors 2 gemäß einer zweiten Ausführungsform der elektrischen Lenkung 1 in einem Längsschnitt dargestellt. Mit der Figur 2 übereinstimmende Bauelemente sind mit denselben Bezugszeichen versehen.

Die Ausführungsform der Figur 3 unterscheidet sich von der Ausführungsform der Figur 2 lediglich durch die Ausbildung des Drehzahlsensors 21.

Der Drehzahlsensor 21 gemäß dem Ausführungsbeispiel der Figur 3 weist eine mit der Eingangswelle 40 des Sensorgetriebes 35 drehfest verbundene Geberscheibe 80 und eine mit der Geberscheibe 80 zusammenwirkende optische Sensoreinheit 81 auf. Die Geberscheibe 80 ist bevorzugt mit nicht näher dargestellten Markierungen bzw. Aussparungen versehen, die von der optischen Sensoreinheit 81 erfasst werden.

Die optische Sensoreinheit 81 ist an der Leiterplatte 60 angeordnet.

Die Geberscheibe 80 ist in dem Steuerungsgehäuse 55 angeordnet, um einen optischen Kontakt zwischen der Geberscheibe 80 und der an der Leiterplatte 60 angeordneten optische Sensoreinheit 81 zu ermöglichen.

Das Sensorgetriebegehäuse 50 ist an dem dem Steuerungsgehäuse 55 zugewandten Oberseite mit einer Aussparung 82 versehen, durch die sich die Eingangswelle 40 bzw. die mit der Eingangswelle 40 drehfest verbundene Geberscheibe 80 in das Innere des Steuerungsgehäuses 55 erstreckt.

In dem Ausführungsbeispiel der Figur 3 ist das Sensorgetriebe 35 vor Verschmutzungen durch das gelenkte Rad 4 geschützt auf dem Lenkmotor 2 platziert. Das Sensorgetriebe 35 der Figur 3 enthält das rotierende Magnetelemente 37 und treibt die Geberscheibe 80 an. Das Magnetelement 37 bildet die Ist-Drehstellung und somit die Ist-Position des gelenkten Rades 4 ab. Die Geberscheibe 80 bildet die Drehzahl und Drehrichtung der Motorabtriebswelle 30 abbildet. In dem Ausführungsbeispiel der Figur 3 arbeitet der Lenkwinkelsensor 20 auf einem magnetischen Messprinzip und der Drehzahlsensor 21 auf einem optischen Messprinzip. Aufgrund der unterschiedlichen Messprinzipen des Lenkwinkelsensors 20 und des Drehzahlsensors 21 kann die Robustheit gegen Störungen erhöht werden.

In den Ausführungsformen der Figuren 2 und 3 ist die Leiterplatte 60 mit der Steuerelektronik 15 des Lenkmotors 2, der Magnet-Sensoreinheit 38 des Lenkwinkelsensors 20 und der Magnet-Sensoreinheit 66 bzw. der optischen Sensoreinheit 81 des Drehzahlsensors 21 versehen. Die Verbindung der Magnet-Sensoreinheit 38 des Lenkwinkelsensors 20 mit der Steuerelektronik 15 des Lenkmotors 2 sowie die Verbindung der Magnet-Sensoreinheit 66 bzw. der optischen Sensoreinheit 81 des Drehzahlsensors 21 mit der Steuerelektronik 15 des Lenkmotors 2 kann hierbei unter Verzicht auf eine Verkabelung durch entsprechende Leiterbahnen auf der Leiterplatte 60 erfolgen. Die Leiterplatte 60 stellt somit eine Hauptleiterplatte dar, die keine Verkabelung zwischen dem Lenkwinkelsensor 20 und der Steuerelektronik 15 des Lenkmotors 2 sowie keine Verkabelung zwischen dem Drehzahlsensor 21 und der Steuerelektronik 15 des Lenkmotors 2 erfordert.

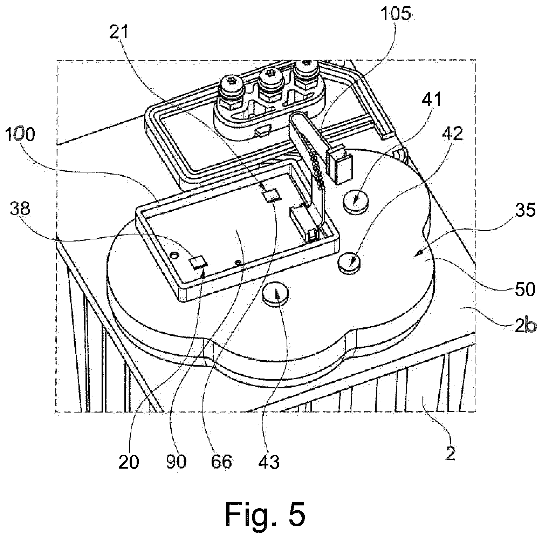

In den Figuren 5 bis 7 ist eine dritte Ausführungsform der Erfindung dargestellt.

Das dritte Ausführungsbeispiel gemäß der Figuren 5 bis 7 entspricht im Aufbau des Sensorgetriebes 35 und der Ausführung des Lenkwinkelsensors 20 sowie des Drehzahlsensors 21 im Wesentlichen dem in den Figuren 2 und 4 dargestellten Ausführungsbeispiel. Mit der Figuren 2 und 4 übereinstimmende Bauelemente sind mit denselben Bezugszeichen versehen.

In dem Ausführungsbeispiel der Figuren 5 bis 7 ist die mit dem Magnetelement 37, das an der Stirnseite der Sensorwelle 36 des Sensorgetriebes 35 angeordnet ist, zusammenwirkende Magnet-Sensoreinheit 38 des Lenkwinkelsensors 20 und die mit dem weiteren Magnetelement 65, das an der Stirnseite der Eingangswelle 40 des Sensorgetriebes 35 angeordnet ist, zusammenwirkende Magnet-Sensoreinheit 66 des Drehzahlsensors 21 an einer Sensorleiterplatte 90 angeordnet. Die Sensorleiterplatte 90 ist in bzw. an dem Sensorgetriebegehäuse 50 angeordnet.

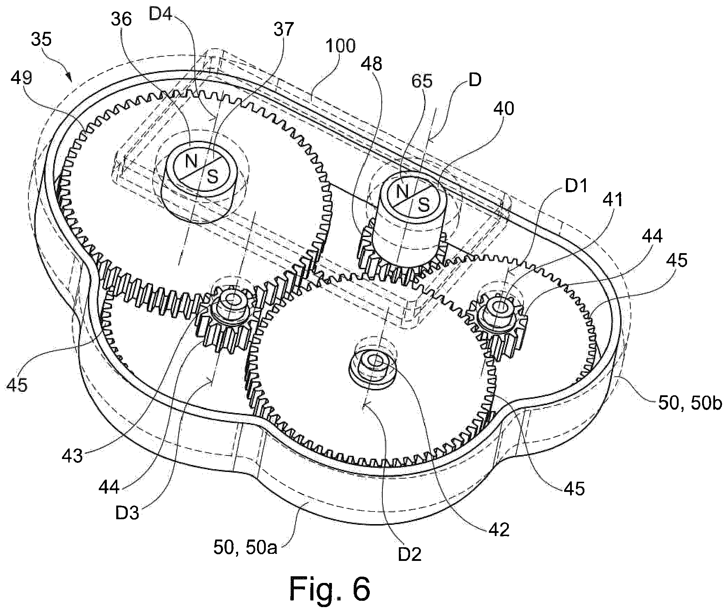

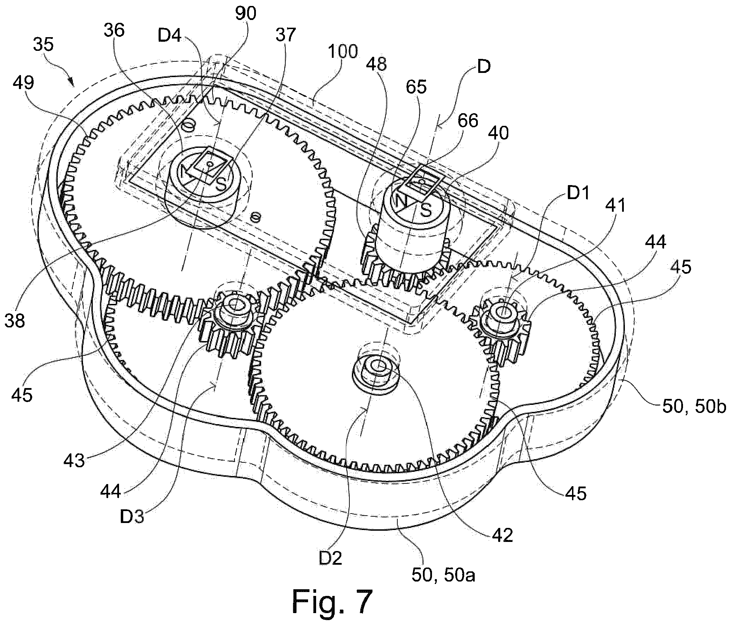

Das Sensorgetriebegehäuse 50 ist hierzu mit einem Aufnahmeraum 100 versehen, in dem die Sensorleiterplatte 90 angeordnet werden kann. Die Figur 5 und die Figur 7 zeigt hierbei das Sensorgetriebegehäuse 50 mit der in dem Aufnahmeraum 100 angeordneten Sensorleiterplatte 90. Die Figur 6 zeigt das Sensorgetriebegehäuse 50 mit dem Aufnahmeraum 100 ohne die Sensorleiterplatte 90.

Die Sensorleiterplatte 90 steht mit einem in der Figur 5 dargestellten Verbindungskabel 105 mit einer in den Figuren 5 bis 7 nicht näher dargestellten, den Lenkmotor 2 ansteuernden Leiterplatte in Verbindung, die mit der Steuerelektronik 15 des Lenkmotors 2 versehen ist.

In dem Ausführungsbeispiel der Figuren 5 bis 7 ist das Sensorgetriebe 35 vor Verschmutzungen durch das gelenkte Rad 4 geschützt auf dem Lenkmotor 2 platziert. Das Sensorgetriebe 35 der Figuren 5 bis 7 enthält zwei rotierende Magnetelemente 37, 65, wobei das Magnetelement 37 die Ist-Drehstellung und somit die Ist-Position des gelenkten Rades 4 abbildet und das weitere Magnetelement 65 die Drehzahl und Drehrichtung der Motorabtriebswelle 30 abbildet. Der Lenkmotor 2 ist somit mit einem integrierten Doppelsensor für die Erfassung der Ist-Drehstellung des gelenkten Rades 4 sowie der Drehzahl und/oder Drehrichtung der Motorabtriebswelle 30 des Lenkmotors 2 versehen.

In dem Ausführungsbeispiel der Figuren 5 bis 7 ist eine von einer Leiterplatte, die mit der Steuerelektronik 15 des Lenkmotors 2 versehen ist, separate Sensorleiterplatte 90 vorgesehen, die mittels des Verbindungskabels 105 mit der mit der Steuerelektronik 15 des Lenkmotors 2 versehenen Leiterplatte verbunden ist. Die separate Sensorleiterplatte 90 ermöglicht eine Prüfung der Sensorfunktion des Lenkwinkelsensors 20 und des Drehzahlsensors 21 unabhängig von der Montage der elektrischen Lenkung.

Gemäß den Figuren 2 bis 7 erfolgt im Betrieb des Lenkmotors 2 ein Antrieb des Sensorgetriebes 35 durch die Motorabtriebswelle 30 des Lenkmotors 2. Die Sensorwelle 36 weist aufgrund derselben Getriebeuntersetzung wie das Lenkuntersetzungsgetriebe 3 über den gesamten Lenkbereich des gelenkten Rades 4 maximal eine Vollumdrehung auf, so dass das Ausgangssignal des Lenkwinkelsensors 21 einem Lenkwinkel des gelenkten Rades 4 zwischen 0° und 360° Grad entspricht.

Die Erfindung ist nicht auf die in den Figuren dargestellten Ausführungsbeispiele beschränkt.

Es versteht sich, dass in dem Ausführungsbeispiel der Figuren 5 bis 7 der Drehzahlsensor 21 alternativ den Aufbau des Drehzahlsensors 21 des Ausführungsbeispiels der Figur 3 aufweisen kann mit der mit der Eingangswelle 40 drehfest verbundenen Geberscheibe 80 und einem an der Sensorleiterplatte 90 angeordneten optischen Sensoreinheit 81.

## Patentansprüche

1. Elektrische Lenkung (1) für ein Flurförderzeug, wobei die elektrische Lenkung (1) einen elektrischen Lenkmotor (2) aufweist, der eine Motorabtriebswelle (30) umfasst, wobei die Motorabtriebswelle (30) des Lenkmotors (2) mit einem Lenkuntersetzungsgetriebe (3) in Verbindung steht, das ausgebildet ist, ein gelenktes Rad (4) um eine Lenkachse (5) zu drehen, wobei die elektrische Lenkung (1) einen Lenkwinkelsensor (20) aufweist, der ausgebildet ist, die Ist-Drehstellung des gelenktes Rades (4) um die Lenkachse (5) zu erfassen, **dadurch gekennzeichnet, dass** der Lenkwinkelsensor (20) ein von der Motorabtriebswelle (30) angetriebenes Sensorgetriebe (35) mit einer Sensorwelle (36), an der ein Magnetelement (37) angeordnet ist, und eine mit dem Magnetelement (37) zusammenwirkende Magnet-Sensoreinheit (38) aufweist, die ausgebildet ist, die Drehstellung des Magnetelements (37) zu erfassen, wobei der Lenkwinkelsensor (20) an einer dem Lenkuntersetzungsgetriebe (3) gegenüberliegenden Stirnseite (2b) des Lenkmotors (2) angebaut ist.

2. Elektrische Lenkung nach Anspruch 1, **dadurch gekennzeichnet, dass** das Sensorgetriebe (35) eine von der Motorabtriebswelle (30) angetriebene Eingangswelle (40) aufweist, die mindesten eine Zwischenwelle (41; 42; 43) antreibt, wobei die Sensorwelle (36) als Abtriebswelle des Sensorgetriebes (35) ausgebildet ist, die mittels der Zwischenwelle (41; 42; 43) angetrieben ist.

3. Elektrische Lenkung nach Anspruch 1 oder 2, **dadurch gekennzeichnet, dass** die Getriebeuntersetzung des Sensorgetriebes (35) identisch zur Getriebeuntersetzung des Lenkuntersetzungsgetriebes (3) ist.

4. Elektrische Lenkung nach einem der Ansprüche 1 bis 3, **dadurch gekennzeichnet, dass** das Magnetelement (37) an einer Stirnseite der Sensorwelle (36) angeordnet ist und die Magnet-Sensoreinheit (38) fluchtend zu einer Drehachse (D4) der Sensorwelle (36) angeordnet ist.

5. Elektrische Lenkung nach einem der Ansprüche 1 bis 4, **dadurch gekennzeichnet, dass** das Sensorgetriebe (35) in einem Sensorgetriebegehäuse (50) angeordnet ist, das an der dem Lenkuntersetzungsgetriebe (3) gegenüberliegenden Stirnseite (2b) des Lenkmotors (2) angeordnet ist.

6. Elektrische Lenkung nach einem der Ansprüche 1 bis 5, **dadurch gekennzeichnet, dass** die elektrische Lenkung (1) einen Drehzahlsensor (21) aufweist, der ausgebildet ist, die Drehzahl und/oder die Drehrichtung der Motorabtriebswelle (30) des Lenkmotors (2) zu erfassen.

7. Elektrische Lenkung nach Anspruch 6, dass die Eingangswelle (40) des Sensorgetriebes (35) drehfest mit der Motorabtriebswelle (30) des Lenkmotors (3) verbunden ist und der Drehzahlsensor (21) ausgebildet ist, die Drehzahl und/oder die Drehrichtung der Eingangswelle (40) des Sensorgetriebes (35) zu erfassen.

8. Elektrische Lenkung nach Anspruch 7, **dadurch gekennzeichnet, dass** der Drehzahlsensor (21) ein an der Eingangswelle (40) angeordnetes weiteres Magnetelement (65) aufweist und eine mit dem weiteren Magnetelement (65) zusammenwirkende weitere Magnet-Sensoreinheit (66) aufweist, die ausgebildet ist, die Drehzahl und/oder die Drehrichtung des weiteren Magnetelements (65) zu erfassen.

9. Elektrische Lenkung nach Anspruch 8, **dadurch gekennzeichnet, dass** das weitere Magnetelement (65) an einer Stirnseite der Eingangswelle (40) angeordnet ist und die weitere Magnet-Sensoreinheit (66) fluchtend zu einer Drehachse (D) der Eingangswelle (40) angeordnet ist.

10. Elektrische Lenkung nach Anspruch 7, **dadurch gekennzeichnet, dass** der Drehzahlsensor (21) eine mit der Eingangswelle (40) verbundene Geberscheibe (80) und eine mit der Geberscheibe (80) zusammenwirkende optische Sensoreinheit (81) aufweist.

11. Elektrische Lenkung nach einem der Ansprüche 1 bis 10, **dadurch gekennzeichnet, dass** die Magnet-Sensoreinheit (38) des Lenkwinkelsensors (20) an einer Leiterplatte (60; 90) angeordnet ist.

12. Elektrische Lenkung nach Anspruch 11, **dadurch gekennzeichnet, dass** die Leiterplatte (60; 90) in das Sensorgetriebegehäuse (50) angebaut oder eingebaut ist oder die Leiterplatte (60; 90) in einem an dem Sensorgetriebegehäuse (55) angebauten Steuerungsgehäuse (55) angeordnet ist.

13. Elektrische Lenkung nach Anspruch 11 oder 12, **dadurch gekennzeichnet, dass** an der Leiterplatte (60; 90) die weitere Magnet-Sensoreinheit (66) oder die optische Sensoreinheit (81) des Drehzahlsensors (21) angeordnet ist.

14. Elektrische Lenkung nach einem der Ansprüche 11 bis 13, **dadurch gekennzeichnet, dass** die Leiterplatte (90)
- mittels eines Verbindungskabels (105) mit einer den Lenkmotor (2) ansteuernden Steuerelektronik (15) verbunden ist und/oder
- mit einer den Lenkmotor (2) ansteuernden Steuerelektronik (15) versehen ist.

15. Flurförderzeug mit einer elektrischen Lenkung (1) nach einem der vorangegangenen Ansprüche.
